# EUROPÄISCHE PATENTSCHRIFT

(11) **EP 0 907 825 B1**
(45) Veröffentlichungstag und Bekanntmachung des Hinweises auf die Patenterteilung: **30.08.2000**
(21) Anmeldenummer: 97930388.0
(22) Anmeldetag: 24.06.1997
(51) Int. Cl.: F02B 23/10

(54) **GEMISCHVERDICHTENDER ZWEITAKT-OTTOMOTOR MIT KRAFTSTOFFEINSPRITZUNG**
MIXTURE-COMPRESSING TWO-STROKE SPARK IGNITION ENGINE WITH FUEL INJECTION
MOTEUR DEUX TEMPS A ALLUMAGE PAR ETINCELLE, A COMPRESSION DU MELANGE ET A INJECTION DE CARBURANT

(30) Priorität: 05.07.1996 DE 19627040
(43) Veröffentlichungstag der Anmeldung: 14.04.1999
(73) Patentinhaber: Dolmar GmbH, 22045 Hamburg (DE)
(72) Erfinder: SCHULZ, Peter, D-09123 Chemnitz (DE); MATTHEES, Klaus, D-09599 Freiberg (DE); MEHLHOSE, Uwe, D-09123 Chemnitz (DE); DÖRFELT, Reinhart, D-20149 Hamburg (DE); SINGER, Andreas, D-08427 Fraureuth (DE)
(74) Vertreter: Gerbaulet, Hannes
(86) Internationale Anmeldenummer: EP9703298
(87) Internationale Veröffentlichungsnummer: WO9801655

(56) Entgegenhaltungen:
- WO-A-87/00575
- DD-A- 228 585
- DE-C- 922 311
- US-A- 5 249 557
- US-A- 5 307 792

## Beschreibung

### Technisches Gebiet

Die vorliegende Erfindung bezieht sich auf gemischverdichtende Zweitakt-Ottomotoren mit Kraftstoffeinspritzung gemäß Oberbegriff des Anspruchs 1.

### Stand der Technik

Vorbekannt ist ein gemischverdichtender Zweitakt-Ottomotor mit Kraftstoffeinspritzung, bei dem ein außermittig der Zylinderachse zur Auslaßseite hin versetzter kugelförmiger Brennraum mit ca. 260° Erstreckung angeordnet ist (DD-A1-228 585). Vorbekannt ist weiterhin durch die Druckschrift (DD-A1-3257) mittig im Zylinderkopf einen hutförmigen Brennraum anzuordnen. Eine Einspritzdüse mündet bei beiden Ausführungen jeweils in der dem Auslaßkanal entgegengesetzten Zylinderseite, und zwar unterhalb des im oberen Totpunkt (OT) gebildeten Verdichtungsraumes in einer thermisch weniger beaufschlagten Zone.

Bei dem im Zylinderkopf liegenden Kugelbrennraum, der eine zum Zylinderkopf hin wärmeisolierende Halbschale aufweist, reicht der von der Einspritzdüse abgegebene Strahlkegel des eingespritzten Kraftstoffes mit einem überwiegenden Anteil in den Kugelbrennraum hinein und mit einem geringen Anteil an die am Zylinderraum und Quetschquerschnitt gelegene Kante. Diese Kante soll durch das Überspritzen gekühlt werden. Die bekannte Anordnung stellt zwar sicher, daß die Einspritzdüse thermisch wenig belastet wird, jedoch erweist sich die Lage des nach der Auslaßseite hin versetzten Brennraumes mit seiner Einschnürung für ein Ausspülen mit Frischladung als nicht optimal.

Bei dem hutförmigen Brennraum gemäß der Druckschrift DD-A1-3257 ist der Strahlkegel der Einspritzdüse so geführt, daß der gesamte Brennraum und sogar teilweise der Nahbereich der in den Brennraum hineinragenden Zündkerze vom Strahlkegel erfaßt wird. Dabei wird jedoch nur ein schräges Segment des Zylinderraumes vom Einspritzstrahl durchdrungen. Auch bei dieser bekannten Anordnung ist die Einspritzdüse thermisch wenig belastet. Jedoch sitzt die Einspritzdüse nur wenig oberhalb der oberen Kante des Auslaßkanals. Dies erfordert einen frühen Einspritzbeginn bei noch offenem Auslaßkanal mit den sich daraus ergebenden Nachteilen.

Aus der DE 39 04 760 A1 ist eine Otto-Brennkraftmaschine mit Direkteinspritzung bekannt, bei der ein Komprimierbereich zwischen zwei Komprimierbereich-Begrenzungsflächen, die einen Teil des Kolbenbodens des Kolbens sowie einen Teil einer unteren Fläche des Zylinderkopfes umfassen und in einer Hälfte des Querschnitts des Zylinders angeordnet sind, bestimmt ist, wobei der Komprimierbereich eine geschlossene, von einem Teil der Innenfläche der Zylinderbohrung abgegrenzte Seite sowie eine in einer Richtung zum Zentrum des Zylinders hin offene Seite hat, wobei vorgesehen ist, daß der Komprimierbereich zum Zentrum des Zylinders hin derart erweitert ist, daß ein mittiger Teil der offenen Seite des Komprimierbereichs nahe dem Zentrum des Zylinders angeordnet ist, und daß der Komprimierbereich als Luftströmung in dem Zylinder eine zusammengepreßte Strömung, die bei einer dem oberen Totpunkt nahen Stellung des Kolbens die Verdampfung des Kraftstoffs unterstützt, erzeugt, daß die Kraftstoff-Einspritzdüse nahe einem zentralen Teil der geschlossenen Seite des Komprimierbereichs angeordnet und derart gerichtet ist, daß wenigstens ein Teil des Kraftstoffs auf eine der Komprimierbereich-Begrenzungsflächen gerichtet wird, so daß der an dieser einen Komprimierbereich-Begrenzungsfläche haftende Kraftstoff in seiner Verdampfung durch die zusammengepreßte Strömung unterstützt wird, und daß die Zündkerze nahe dem Zentrum des Zylinders sowie dem mittigen Teil der offenen Seite des Komprimierbereichs gegenüberliegend angeordnet ist und den durch die zusammengepreßte Strömung der Zündkerze hin geblasenen verdampften Kraftstoff zündet.

Die US-A-5 307 793 (D1) zeigt einen gemischverdichtenden Zweitakt-Ottomotor mit Kraftstoffeinspritzung in den Zylinderraum folgender Bauart: in einen außermittig der Zylinderachse versetzten Halbkugelbrennraum im Zylinderkopf reicht eine Zündkerze hinen, beiderseits der Längsebene des Auslaßkanals münden gegen die, dem Auslaßkanal entgegengesetzte Zylinderseite gerichtete Überstromkanläle, eine Einspritzdüse mündet in der Zylinderseite mit den Einlaßkanal in einer thermisch niedriger beaufschlagten Zone außerhalb des Verdichtungsraumes, die Einspritzung erfolgt zum Verdichtungsraum gerichtet, der Brennraum ist mit seiner Brennraumachse von der Zylinderachse zu der dem Auslaßkanal gegenüberliegenden Seite des Zylinders versetzt angeordnet, wobei die Einspritzdüse in der Weise zum Brennraum angeordnet ist, daß der obere Teil des Strahlkegels einen überwiegenden Volumenteil des Brennraumes durchdringt.

### Darstellung der Erfindung, Aufgabe, Lösung, Vorteile

Es ist Aufgabe der Erfindung einen gemischverdichtenden Zweitakt-Ottomotor mit Kraftstoffeinspritzung zu schaffen, bei dem die genannten Nachteile vermieden werden und der eine homogene Gemischbildung ermöglicht. Hierbei soll sowohl der dem oberen Totpunkt nahe Zylinderraum als auch der eigentliche Brennraum von dem eingespritzten Strahlkegel erfaßt werden. Weiterhin soll ein direktes Anspritzen der Zündkerze und deren unmittelbarem Umfeld sicher vermieden werden.

Diese Aufgabe wird durch die im Hauptanspruch genannten Mittel gelöst.

Die Lage des Brennraumes ist vom Auslaßkanal in entgegengesetzter Richtung versetzt, wodurch eine besonders günstige Anordnung der Einspritzdüse und Aufteilung des Strahlkegels zu den den Kompressionsraum umschließenden Oberflächen und dem Zylinderraum vor dem oberen Totpunkt erreicht wird.

Besonders gleichmäßig ist die Gemischbildung, wenn gemäß einer ersten bevorzugten Ausführungsform der Erfindung der obere und untere Teil des Strahlkegels jeweils etwa die Hälfte des Strahlkegels bilden.

Eine nachteilige Anreicherung von Kraftstoff im Bereich vor oder an der Zündkerze wird sicher vermieden, wenn gemäß einer weiteren bevorzugten Ausführungsform im Brennraum ein Teilbereich vom oberen Teil des Strahlkegels, in dem die Zündkerze mündet, nicht beaufschlagt ist.

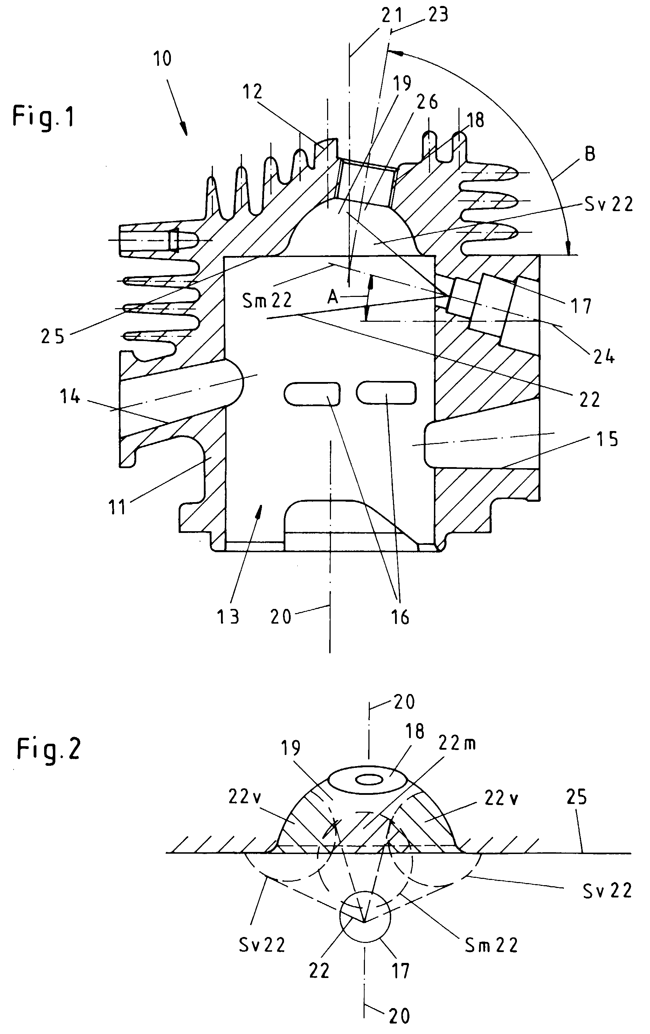

Eine besonders angepaßte Gestaltung des Strahlmantels läßt sich durch eine Mehrzahl von Einzelstrahlen erzielen. Die Teile des Strahlkegels werden durch Einzelstrahlen gebildet, welche, bezogen auf eine gedachte Achse des Strahlkegels, unterschiedliche Strahlachsenwinkel und Strahlwinkel aufweisen können (Fig. 2).

Eine vorteilhafte Weiterbildung dieser Ausführungsformen zeichnet sich dadurch aus, daß der Strahlkegel einen Öffnungswinkel zwischen 35° und 55° aufweist, und daß die gedachte Achse des Strahlkegels mit der Zylinderbodenebene einen Winkel von 10° bis 20° einschließt und diese auf der der Einspritzachse abgewandten Seite der Zylinderachse schneidet.

### Kurze Beschreibung der Zeichnungen

Die Erfindung soll nachfolgend anhand von Ausführungsbeispielen im Zusammenhang mit der Zeichnung erläutert werden.

Bei allen Ausführungsbeispielen wurde der Einfachheit halber auf die Darstellung von Zündkerze und Einspritzdüse verzichtet.

Es zeigt
- Fig. 1: einen Schnitt durch Zylinder und Zylinderkopf eines erfindungsgemäß ausgeführten Motors in der Ebene der Zylinderachse mittig durch Ansaug- und Auslaßkanal,
- Fig. 2: einen Schnitt gemäß Fig. 1 mit Projektionen der drei Einspritzstrahlen einer Dreistrahldüse.

### Bester Weg zur Ausführung der Erfindung

Die Fig. 1 zeigt im Längsschnitt in einem bevorzugten Ausführungsbeispiel der Erfindung eine Zylinderanordnung 10. Der Zylinder 11 ist im oberen Teil mit Kühlrippen ausgestattete und an seiner Zylinderbodenebene 25 durch einen ebenfalls mit Kühlrippen versehenen Zylinderkopf 12 geschlossen. Von dem durch den Zylinder 11 umschlossenen Zylinderraum 13, in welchem sich der nicht dargestellte Kolben auf und ab bewegt, ist in einer Längsebene, die mit der Bildebene identisch ist, ein schräg nach unten verlaufender Auslaßkanal 14 für die Verbrennungsgase nach außen geführt. In derselben Ebene, jedoch gegenüberliegend, befindet sich ein Einlaßkanal 15 für die Verbrennungsluft. Die durch den Einlaßkanal 15 angesaugte Verbrennungsluft wird in üblicher Weise durch den Kolben über Überströmkanäle in den oberen Teil des Zylinderraumes 13 gedrückt, wo sie durch Einlaßschlitze 16 eintritt. Die auf beiden Seiten der Längsebene vorhandenen Überströmkanäle sind so gerichtet, daß die ausströmende Verbrennungsluft in Richtung der dem Auslaßkanal 14 gegenüberliegenden Seite (Wand) des Zylinders 11 strömt und dabei axial abgelenkt wird.

Der Zylinderkopf 12 weist einen halbkugelförmigen Brennraum 19 auf, in den seitlich schräg eine Zündkerze (nicht dargestellt) hineinragt, wobei die Zündelektroden in einen Teilbereich 26 des Brennraumes hineinreichen.

Der Winkel β zwischen der Zündkerzenachse 23 und der Zylinderbodenebene 25 beträgt vorzugsweise etwa 40° - 60°. Der Brennraum 19 ist mit seiner Brennraumachse 21 in zum Auslaßkanal 14 entgegengesetzter Richtung von der Zylinderachse 20 versetzt angeordnet. Auf der gleichen Seite ist schräg nach oben gerichtet in der Wand des Zylinders eine (nicht dargestellte) Einspritzdüse angeordnet. Die Einspritzdüse spritzt Kraftstoff in den Brenn- bzw. Zylinderraum ein, und zwar in Form eines Strahlkegels 22. Die Achse des Strahlkegels 22 und die Einspritzdüsenachse 24 fallen dabei zusammen.

Die Einspritzdüse mündet unterhalb des bei Stellung im oberen Totpunkt gebildeten Verdichtungsraumes in einer thermisch gering beaufschlagten Zone des Zylinders 11. Die Anordnung der Einspritzdüse und die Ausrichtung des Strahlkegels 22 sind so gewählt, daß der obere Teil des Strahlkegels 22 einen überwiegenden Volumenanteil des Brennraumes 19 durchdringt, und der restliche untere Teil des Strahlkegels 22 sich unterhalb der Zylinderbodenebene 25 und außerhalb des Brennraumes 19 erstreckt.

Den oberen und unteren Teil des Strahlkegels 22 bilden jeweils Hälften des Strahlkegels 22. Der Strahlkegel 22 kann vorteilhafterweise durch eine Mehrzahl von Einzelstrahlen gebildet sein (Fig. 2). Gleiches gilt für beide Teile des Strahlkegels 22. Um die Achse 24 erstreckt sich der Strahlkegel 22 mit vorzugsweise einem Öffnungswinkel von 35° und 55° (auf der der Einspritzdüse abgewandten Seite). Die gedachte Achse 24 des Strahlkegels 22 schließt mit der Zylinderbodenebene 25 einen Winkel A von 10° bis 20° ein. Sie kreuzt die Zylinderbodenebene 25 jenseits der Zylinderachse 20 (auf der der Einspritzdüse abgewandten Seite). Dadurch wird bei gleichmäßiger Gemischbildung zugleich in dem Brennraum 19 ein (oben bereits erwähnter) Teilbereich 26 geschaffen, in welchem die Zündkerze vom Strahlkegel 22 nicht direkt erreicht wird.

Der Schnitt gemäß Fig. 2 zeigt mit den Projektionen der drei Einspritzstrahlen einer Dreistrahldüse deren Verlauf etwa quer zur Zylinderachse. An den Strahlprojektionen sind die in den Brennraum 19 gelangenden Flächenanteile der drei Einspritzstrahlen erkennbar.

Der sich keglig aufweitende, die Zylinderlängenachse 20 schneidende Strahl Sm 22 wird überwiegend im Zylinderraum luftverteilt wirksam und trifft nur mit einem kleinen Segment 22m die Wand des Brennraumes 19 im Übergangsbereich zur Zylinderebene, welche der Einspritzdüse zugewandt ist. Die beiden, die Zylinderachse 20 nicht schneidenden Strahlen Sv22 gelangen luftverteilt in den Brennraum 19 und treffen etwa je mit 40 % ihrer Fläche 22v an der der Einspritzdüse zugewandten Seite des Brennraumes 19 auf. Weiterhin werden Bereiche des Zylinderbodens und des Übergangsbereiches zur Zylinderebene angespritzt, jedoch treffen sie keine unmittelbar beidseits von der Zündkerze gelegene Wandbereiche.

In Fig. 2 entsprechen die Projektionen der drei Einspritzstrahlen ihrer Ausbreitung in der Ebene, welche senkrecht zur Ebene der Abb. 1 and parallel zur Zylinderachse gerichtet ist and in welcher der Brennraum 19 in die, der Einspritzdüse abgewandten Seite, der Zylinderbodenebene 25 übergeht.

Insgesamt ergibt sich mit der Erfindung eine Anordnung von Brennraum und Einspritzführung, die eine optimale Gemischbildung, insbesondere bei kleinen Zylindereinheiten, und eine sichere Funktion der Zündkerze gewährleistet.

| | |
|---|---|
| Bezugszeichenliste: | |
| Zylinderanordnung | 10 |
| Zylinder | 11 |
| Zylinderkopf | 12 |
| Zylinderraum | 13 |
| Auslaßkanal | 14 |
| Einlaßkanal | 15 |
| Einlaßschlitz | 16 |
| Bohrung (Einspritzdüse) | 17 |
| Bohrung (Zündkerze) | 18 |
| Brennraum (halbkugelig) | 19 |
| Zylinderachse | 20 |
| Brennraumachse | 21 |
| Strahlkegel | 22 |
| Zündkerzenachse | 23 |
| Einspritzdüsenachse (= gedachte Achse des Strahlkegels 22) | 24 |
| Zylinderbodenebene | 25 |
| Teilbereich (Brennraum) | 26 |
| Winkel zwischen gedachter Strahlkegelachse 24 und Ebene parallel zu Zylinderbodenebene 25 | A |
| Winkel zwischen Zündkerzenachse 23 und Zylinderbodenebene 25 | β |

## Patentansprüche

1. Gemischverdichtender Zweitakt-Ottomotor mit Kraftstoffeinspritzung in den Zylinderraum (30) folgender Bauart:
- in einen außermittig der Zylinderachse (20) versetzten Brennraum (19) im Zylinderkopf (12), der im wesentlichen die Form einer Halbkugel aufweist, reicht eine Zündkerze (bei 18) hinein,
- beidseits der Längsebene eines Auslaßkanals (14) münden gegen die, dem Auslaßkanal (14) entgegengesetzte Zylinderseite gerichtete Überströmkanäle,
- eine Einspritzdüse (bei 17) mündet in der Zylinderseite mit dem Einlaßkanal (15) in einer thermisch niedriger beaufschlagten Zone außerhalb des Verdichtungsraumes,
- die Einspritzung erfolgt zum Verdichtungsraum gerichtet und,
der Brennraum (19) ist mit seiner Brennraumachse (21) von der Zylinderachse (20) zu der dem Auslaßkanal (14) gegenüberliegenden Seite des Zylinders (11) versetzt angeordnet, die Einspritzdüse ist in der Weise zum Brennraum (19) angeordnet, daß der obere Teil des Strahlkegels (22) einen überwiegenden Volumenanteil des Brennraumes (19) durchdringt,
gekennzeichnet dadurch,
daß die Einspritzdüse (bei 17) in der Weise zum Brennraum (19 angeordnet ist, daß der untere Teil des Strahlkegels (22) sich unter der Zylinderbodenebene (25) etwa quer zur Zylinderachse (20), jedoch außerhalb des Brennraumes (19) erstreckt.

2. Gemischverdichtender Zweitakt-Ottomotor nach Anspruch 1,
dadurch gekennzeichnet,
daß der obere und untere Teil des Strahlkegels (22) jeweils etwa Hälften des Strahlkegels (22) sind.

3. Gemischverdichtender Zweitakt-Ottomotor nach Anspruch 1 oder 2,
dadurch gekennzeichnet,
daß der Brennraum (19) einen Teilbereich (26) aufweist, welcher vom oberen Teil des Strahlkegels (22) nicht beaufschlagt ist, wobei die Zündkerze in diesem Teilbereich (26) in den Brennraum (19) mündet.

4. Gemischverdichtender Zweitakt-Ottomotor nach Anspruch 1,
dadurch gekennzeichnet,
daß die beiden Teile des Strahlkegels (22) durch eine Mehrzahl von Einzelstrahlen gebildet wird.

5. Gemischverdichtender Zweitakt-Ottomotor nach Anspruch 4,
dadurch gekennzeichnet,
daß die Teile des Strahlkegels (22) jeweils durch Einzelstrahlen gebildet werden, welche, bezogen auf eine gedachte Achse (24) des Strahlkegels (22), unterschiedliche Strahlachsenwinkel und Strahlwinkel aufweisen.

6. Gemischverdichtender Zweitakt-Ottomotor nach Anspruch 1,
dadurch gekennzeichnet,
daß der Strahlkegel (22) einen Öffnungswinkel zwischen 35° und 55° aufweist, und daß die gedachte Achse (24) des Strahlkegels (22) mit der Zylinderbodenebene (25) einen Winkel (A) von 10° bis 20° einschließt und die Zylinderbodenebene (25) auf der der Einspritzdüse abgewandten Seite der Zylinderachse (20) schneidet.

7. Gemischverdichtender Zweitakt-Ottomotor nach Anspruch 1 oder 4,
dadurch gekennzeichnet,
daß der Strahlkegel (22) aus drei Einzelstrahlen gebildet ist, wobei zwei Einzelstrahlen die oberen Bereiche eines nierenförmigen Strahlkegels (22) bilden und ein Strahl den mittigen Bereich bildet.

8. Gemischverdichtender Zweitakt-Ottomotor nach Anspruch 7,
dadurch gekennzeichnet,
daß die zwei Einzelstrahlen (Sv22) des oberen Bereiches des nierenförmigen Strahlkegels einen Strahlwinkel zwischen 20° und 45° aufweisen und außermittig zur Zylinderachse (20) gerichtet sind, daß der, den mittigen Bereich des Strahlkegels (22) bildende Strahl (Sm22) vorzugsweise einen die Zylinderachse (20) schneidenden Strahlwinkel aufweist, der jedoch überwiegend die Zylinderbodenebene (25) und nur den Randbereich der, der Düse (bei 17) zugewandten Seite des Brennraumes (19) trifft.

## Claims

1. A mixture compressing two-cyle Otto engine with fuel injection into the cylinder chamber (30) of following design :
- an ignition plug (by 18) penetrates into a combustion chamber (19) placed off-center relatively to the cylinder axis (20) in the cylinder head (12) which substantially has the shape of a hemisphere,
- overflow channels orientated against the cylinder side opposed to the discharge channel (14) run on both sides of the longitudinal surface plane of a discharge channel (14)
- an injection nozzle (by 17) runs in the cylinder side with the intake port (15) in a thermally low loaded area outside the compression space,
- the injection is carried out orientated to the compression space and
the combustion chamber (19) is placed with its combustion chamber axis (21) offset from the cylinder axis (20) to the side of the cylinder (11) opposed to the discharge channel (14), the injection nozzle is placed in such a way to the combustion chamber (19) that the upper part of the jet cone (22) penetrates into a preponderant volume part of the combustion chamber (19),
characterized in
that the injection nozzle (by 17) is placed in such a way to the combustion chamber (19) that the lower part of the jet cone (22) extends under the cylinder base surface plane (25) approximately transversaly to the cylinder axis (20), however outside the combustion chamber (19).

2. A mixture compressing two-cyle Otto engine according to claim 1,
characterized in
that the upper and the lower part of the jet cone (22) are respectively approximately halfs of the jet cone (22).

3. A mixture compressing two-cyle Otto engine according to claim 1 or 2,
characterized in
that the combustion chamber (19) has a partial area (26) which is not loaded by the upper part of the jet cone (22), the ignition plug in this partial area (26) running into the combustion chamber (19).

4. A mixture compressing two-cyle Otto engine according to claim 1,
characterized in
that both parts of the jet cone (22) are formed by a great number of individual jets.

5. A mixture compressing two-cyle Otto engine according to claim 4,
characterized in
that the parts of the jet cone (22) are respectively constituted by individual jets which have different jet axis angles and jet angles relatively to an imaginary axis (24) of the jet cone (22).

6. A mixture compressing two-cyle Otto engine according to claim 1,
characterized in
that the jet cone (22) has an opening angle between 35° and 55° and that the imaginary axis (24) of the jet cone (22) with the cylinder base surface plane (25) includes an angle (A) of 10° to 20° and cuts the cylinder base surface plane (25) on the side of the cylinder axis (20) turned away from the injection nozzle.

7. A mixture compressing two-cyle Otto engine according to claim 1 or 4,
characterized in
that the jet cone (22) is constituted by three individual jets, two individual jets constituting the upper areas of a reniform jet cone (22) and one jet constituting the middle area.

8. A mixture compressing two-cyle Otto engine according to claim 7,
characterized in
that the two individual jets (Sv22) of the upper area of the reniform jet cone have a jet angle between 20° and 45° and are orientated off-center relatively to the cylinder axis (20), that the jet (Sm22) constituting the middle area of the jet cone (22) preferably has a jet angle cutting the cylinder axis (20), this angle however mainly running against the cylinder base surface plane (25) and only the marginal area of the side of the combustion chamber (19) which is turned to the nozzle (by 17).

## Revendications

1. Moteur Otto à deux temps compresseur de mélange avec injection de carburant dans le compartiment de cylindre (30) de construction suivante :
- une bougie d'allumage (en 18) pénètre dans une chambre de combustion (19) déplacée par rapport au milieu de l'axe du cylindre (20) dans la culasse de cylindre (12) qui présente substantiellement la forme d'une hémisphère,
- des canaux de trop-plein orientés contre le côté du cylindre qui est opposé au canal d'échappement (14) aboutissent des deux côtés du plan longitudinal d'un canal d'échappement (14),
- un injecteur (en 17) aboutit dans le côté du cylindre avec le canal d'admission (15) dans une zone faiblement chargée thermiquement hors de la chambre de compression,
- l'injection est effectuée orientée vers la chambre de compression et
la chambre de combustion (19) est placée avec son axe de chambre de combustion (21) en étant décalée de l'axe du cylindre (20) vers le côté du cylindre (11) qui est opposé au canal d'échappement (14), l'injecteur est placé vers la chambre de combustion (19) de telle manière que la partie supérieure du cône de jet (22) pénètre une partie prépondérante de la chambre de combustion (19),
caractérisé en ce
que l'injecteur (en 17) est placé vers la chambre de combustion (19) de telle manière que la partie inférieure du cône de jet (22) s'étend sous le plan du fond du cylindre (25) approximativement transversalement par rapport à l'axe du cylindre (20), cependant en dehors de la chambre de combustion (19).

2. Moteur Otto à deux temps compresseur de mélange selon la revendication 1,
caractérisé en ce
que la partie supérieure et la partie inférieure du cône de jet (22) sont respectivement à peu près des moitiés du cône de jet (22).

3. Moteur Otto à deux temps compresseur de mélange selon la revendication 1 ou 2,
caractérisé en ce
que la chambre de combustion (19) présente une zone partielle (26) qui n'est pas chargée par la partie supérieure du cône de jet (22), la bougie d'allumage dans cette zone partielle (26) aboutissant dans la chambre de combustion (19).

4. Moteur Otto à deux temps compresseur de mélange selon la revendication 1,
caractérisé en ce
que les deux parties du cône de jet (22) sont formées par une multitude de jets individuels.

5. Moteur Otto à deux temps compresseur de mélange selon la revendication 4,
caractérisé en ce
que les parties du cône de jet (22) sont formées respectivement par des jets individuels qui présentent, par rapport à un axe imaginaire (24) du cône de jet (22) différents angles d'axe de jet et différents angles de jet.

6. Moteur Otto à deux temps compresseur de mélange selon la revendication 1,
caractérisé en ce
que le cône de jet (22) présente un angle d'ouverture entre 35° et 55° et que l'axe imaginaire (24) du cône de jet (22) inclut avec le plan du fond du cylindre (25) un angle (A) de 10° à 20° et coupe le plan du fond du cylindre (25) sur le côté de l'axe du cylindre (20) qui est détourné de l'injecteur.

7. Moteur Otto à deux temps compresseur de mélange selon la revendication 1 ou 4,
caractérisé en ce
que le cône de jet (22) est formé par trois jets individuels, deux jets individuels formant les zones supérieures d'un cône de jet réniforme (22) et un jet forme la zone du milieu.

8. Moteur Otto à deux temps compresseur de mélange selon la revendication 7,
caractérisé en ce
que les deux jets individuels (Sv22) de la zone supérieure du cône de jet réniforme présentent un angle de jet entre 20° et 45° et sont orientés excentriques par rapport à l'axe du cylindre (20), que le jet (Sm22) qui forme la zone du milieu du cône de jet (22) présente de préférence un angle de jet qui coupe l'axe du cylindre (20), angle qui touche cependant de manière prépondérante le plan du fond du cylindre (25) et seulement la zone marginale du côté de la chambre de combustion (19) qui est tourné vers l'injecteur (en 17).
